(19) Europäisches Patentamt
European Patent Office
Office européen des brevets

(11) **EP 4 746 386 A1**

(12) **EUROPEAN PATENT APPLICATION**

(43) Date of publication:
**20.05.2026 Bulletin 2026/21**

(21) Application number: **25209871.0**

(22) Date of filing: **20.10.2025**

(51) International Patent Classification (IPC):
***H04L 69/18*** (2022.01)    ***H04L 5/16*** (2006.01)
***H04L 5/22*** (2006.01)

(52) Cooperative Patent Classification (CPC):
**H04L 69/18; G06F 13/4282; H04L 5/16; H04L 5/22**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **18.11.2024 IN 202441088960**

(71) Applicant: **NXP USA, Inc.
Austin, TX 78735 (US)**

(72) Inventors:
• **Dasgupta, Arindam
5656 AG Eindhoven (NL)**
• **Daniel, Steven
5656 AG Eindhoven (NL)**
• **Tiruchi Natarajan, Krishnan
5656 AG Eindhoven (NL)**

(74) Representative: **Schmütz, Christian Klaus
Johannes
NXP Semiconductors Germany GmbH
Intellectual Property Group
Beiersdorfstr. 12
22529 Hamburg (DE)**

(54) **EFFICIENT FRAMING SYSTEM FOR THE AGGREGATION OF MULTIPLE DATA STREAMS OVER A SINGLE AGGREGATE LINK**

(57)    An apparatus and method for aggregating multiple data streams over a single aggregate link. Two or more serial communication signals are received. A minimum effective transfer rate (M) for a single aggregate link for a given frame structure is determined. A minimum frame length (FLEN) based on a combination of sync bits (S), propagation delay (PD), turnaround (TA), and payload (P) is set. A transfer rate per bit (R) based on the payload (P) and minimum frame length (FLEN) is evaluated. In response to the transfer rate per bit (R) being less than or equal to the minimum effective transfer rate (M), increment the payload (P) of the given frame structure and repeat the steps above. Otherwise, the serial communication signals are encoded to generate an encoded serial communication signal, wherein the encoded serial communication signal enables the reconstruction of the serial communication signals independent of a clock signal.

FIG. 9

Description

## TECHNICAL FIELD

The present disclosure relates to an efficient framing system for the aggregation of multiple data streams over a single aggregate link

## BACKGROUND

The present invention generally relates to the aggregation of multiple data streams and, more particularly, to frame lengths and framing structures with low latency.

The increasing demand for high-quality, synchronized multimedia experiences in professional and consumer applications typically requires sending multiple isochronous data streams, such as multichannel audio, over a single aggregate wired or wireless link. Isochronous data streams require time-sensitive delivery, meaning data packets must arrive at regular intervals to maintain consistent audio or video quality. This is particularly crucial in multichannel audio digital interfaces, where each audio channel must be delivered in perfect sync to avoid distortion or loss of fidelity in the sound.

To efficiently handle multiple isochronous streams over one interface, the system must ensure reliable, real-time data transfer while maintaining low latency. In wired interfaces like USB or HDMI, advanced data handling and packet scheduling techniques allow simultaneous transmission of multiple streams, ensuring synchronization and high bandwidth utilization. For wireless interfaces such as Wi-Fi or Bluetooth, robust protocols like Bluetooth Low Energy (BLE) or Wi-Fi 6, along with improved error correction, bandwidth management, and prioritization of time-sensitive data, are required to handle the complexity of multiple audio streams without compromising performance. The ability to transmit multiple synchronized streams over one interface simplifies system architecture, reduces cabling, and enhances user experience.

## BRIEF DESCRIPTION OF THE DRAWINGS

The present invention is illustrated by way of example and is not limited by the accompanying figures, in which like references indicate similar elements. Elements in the figures are illustrated for simplicity and clarity and have not necessarily been drawn to scale.

FIG. 1 is a simplified system diagram, according to an example.
FIG. 2 is a flow diagram illustrating how the frame length is set, according to an example.
FIG. 3 is a frame structure with variable frame length, according to an example.
FIG. 4 is a frame timing diagram based on Test Point 2 (TP2), according to an example.
FIG. 5 is a graph of the variation of effective transfer rate versus frame length, according to an example.
FIG. 6 illustrates two different types of frames structures, according to an example.
FIGs. 7A and 7B is a set of graphs, in which FIG. 7A is in normal in size and FIG. 7B is in enlarged in size, illustrating propagation delay for the USB FS downstream path, according to an example.
FIGs. 8A and 8B is a set of graphs, in which FIG. 8A is in normal in size normal size and FIG 8B is in enlarged size, illustrating propagation delay for USB FS upstream path, according to an example.
FIG. 9 is a high level representation of a communication system in accordance with various embodiments of the disclosure.

## DETAILED DESCRIPTION

As required, detailed embodiments are disclosed herein; however, it is to be understood that the disclosed embodiments are merely examples and that the systems and methods described below can be embodied in various forms. Therefore, specific structural and functional details disclosed herein are not to be interpreted as limiting but merely as a basis for the claims and as a representative basis for teaching one skilled in the art to variously employ the disclosed subject matter in virtually any appropriately detailed structure and function. Further, the terms and phrases used herein are not intended to be limiting but rather to provide an understandable description.

## <u>Overview</u>

Many prior systems, including cellular, Wi-Fi, HDMI, etc., multiplex audio, video, and data over a common serial or single aggregate link. They take data from a device, reformat, and multiplex the data, but the characteristics and state of the original protocol used to communicate directly with the device are lost. Also, Wireless USB (W-USB) for a single protocol preserves the USB behavior over a wireless link. However, these prior systems do not preserve the behavior of the hardware for each protocol, including the state of the hardware IO signals.

Disclosed is a novel method to aggregate multiple serial hardware protocols onto a single aggregate link, while preserving all of the behavior of the hardware for each protocol, including the state of the HW IO signals. The end user is not able to perceive a protocol, such as the USB protocol, is actually sent over a wired or wireless link.

One aspect of the claimed invention is preserving the behavior of each serial protocol, including the hardware IO signal state, USB endpoint behavior, UART flow control, GPIO signals, etc. The claimed invention sends more information than just the audio, video, or data.

One aspect of the claimed invention is to provide a variable frame structure and minimum frame length. The variable frame structure permits aggregating multiple data streams while minimizing the latency. The variable frame structure and minimum frame length is designed to work with jitter-sensitive isochronous data stream(s), latency-sensitive bursty data stream(s), and round-trip delay-constrained data stream(s). The claimed invention caters to a variety of protocols with different bandwidth requirements. Examples of protocols include eUSB, SWD, MADI, I2C, and UART.

The claimed invention is applicable to any system that requires the multiplexing and encoding of isochronous, bursty, and latency-sensitive data streams over a wired or wireless single serial aggregate link.

The claimed invention offers an extensive range of applications for systems utilizing serial link aggregation across multiple data rates, effectively addressing the latency and jitter requirements of lower-rate links in the presence of higher data rates. The claimed invention supports both wired and wireless applications, enabling the aggregation of multiple protocols while facilitating the multiplexing and encoding of critical data streams.

## Aggregation System

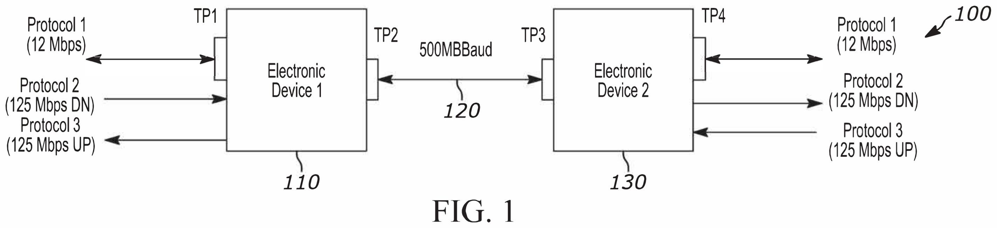

In an aggregator system, the incoming data can be generated from multiple sources and then these independent streams are typically multiplexed and sent over a serial aggregate link and then de-multiplexed at the other end before reconstructing the original streams. One such source of data could be half-duplex bursty traffic. Another could be a unidirectional stream and so on. The example system 100, in order to explain the idea, is shown in FIG. 1. Shown is Electronic Device 1 110 coupled over a 500MBaud communication channel 120 to Electronic Device 2 130. The example protocols listed, i.e., Protocol 1, Protocol 2 and Protocol 3 are further described below. Test Points (TP) are noted in this example system 100. The outgoing aggregated data rate across the single aggregate link between Test Point 2 (TP2), Test Point 3 (TP3) can be a non-integer multiple of the combined input data rate. Aspects of the claimed invention are applicable in both half-duplex and full-duplex data communication systems. Although certain rates have been shown in FIG. 1, the idea is generic and can be applied to other rates and other conditions as well.

Certain protocols, such as USB2 are latency-sensitive and hence call for choosing an optimal frame structure that not only satisfies the bandwidth requirements for aggregation but also satisfies the end-to-end latency and data jitter specifications.

As an example, the protocols are listed below:

- Protocol 1 : 12Mbps half-duplex stream (Bursty)
- Protocol 2 : 125Mbps simplex downstream (Isochronous)
- Protocol 3 : 125Mbps simplex upstream (Isochronous)

Downstream direction implies from Device 1 to Device 2.

Similarly, the upstream direction implies from Device 2 to Device 1.

The following are the constraints of the system:

- Device 1 and Device 2 communicate via half-duplex single aggregate link operating at 500Mbaud.

- Protocol 1 has strict end-to-end latency and tight jitter specification (Device 1 and Device 2 can together be thought of as acting as hybrid repeater in system topology)

## Flow Diagram to Determine Frame Length

The invention provides a step-by-step method to arrive at an optimal frame length and frame structure while aggregating multiple protocols and sending it over a single aggregate link. In doing so, appropriate consideration has been given to minimize the latency and jitter of the protocols involved in aggregation. The frame transfer is assumed to be asynchronous to the protocols for aggregation.

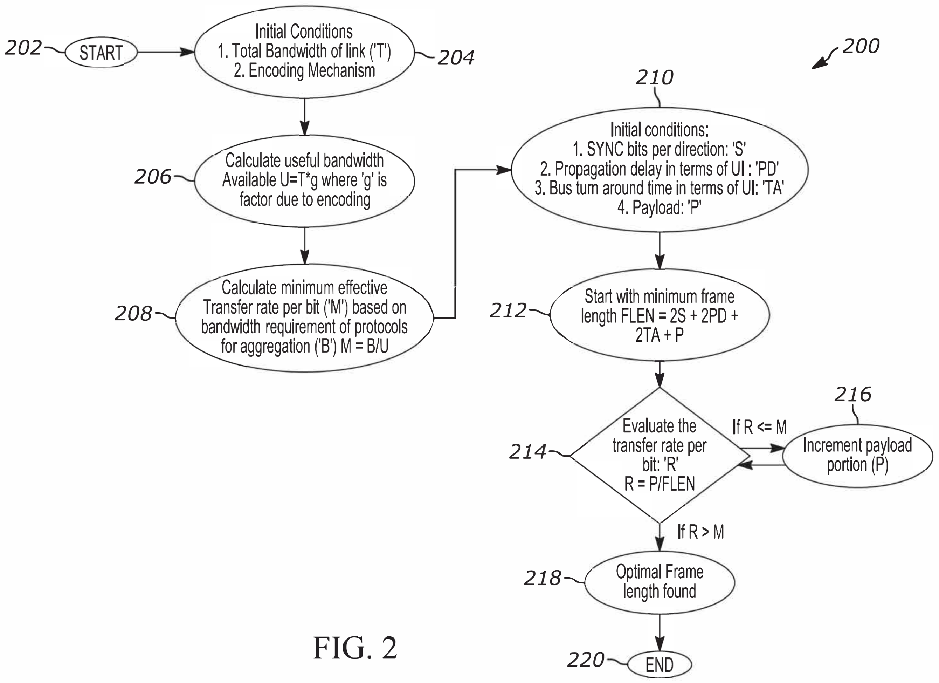

FIG. 2 is a flow diagram 200 illustrating how the frame length (FLEN) is set for both the downstream portion (X) and upstream portion (Y), that is to determine 'X+Y'→ P. P is the sum of bits sent in both the upstream and downstream directions in a Frame. Frame Length (FLEN) is the sum of P plus the overhead. Stated differently, FLEN is the entire frame, which includes the downstream, upstream, and overhead.

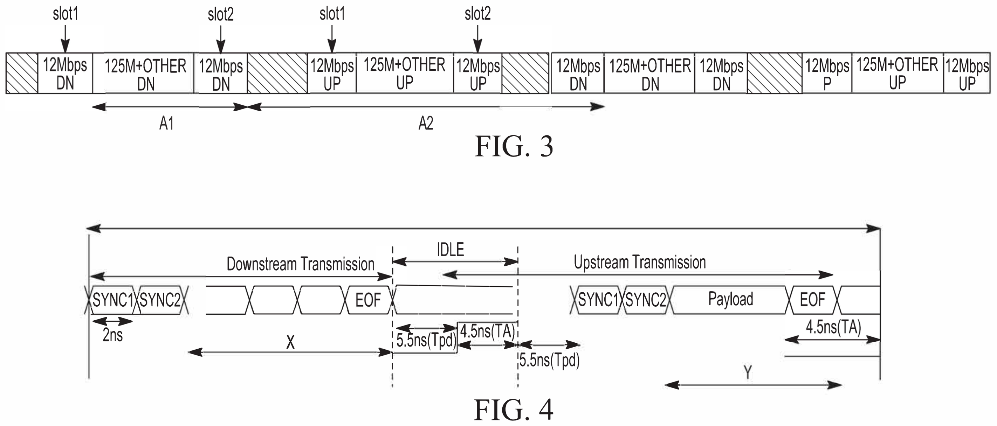

FIG. 3 is a frame structure with variable frame length (FLEN) composed by "A1" and "A2" and where "DN" denotes "downstream" transmission and "UP" denotes "upstream" transmission. The flow diagram begins on step 202 and immediately proceeds to step 204. The downstream portion (X) and the upstream portion (Y) may be different. This is especially true when the upstream and downstream traffic requirements are different. The length of "X" and "Y" would be fixed for a given system. The claimed invention calculates the minimum "X" and minimum "Y" lengths. The electronic device keeps these lengths until the upstream and downstream traffic requirements change.

In step 204, initial conditions are set, from a stored program or variables passed to the Electronic Device 1, 110. The initial conditions include the Total Bandwidth of the single or serial aggregate link (T) and the encoding mechanism. The process proceeds to step 206.

In step 206, the useful available bandwidth is calculated as follows:

$$U = T \times g$$

where g is a factor due to the type of encoding. The process proceeds to step 208.

M is based on the bandwidth requirement of the protocols for aggregation (B). In step 208, the minimum effective transfer rate per bit (M) is calculated as

$$M = B / U$$

. The process continues to step 210.

In step 210, the initial conditions from the stored program or variables are passed to the Electronic Device 1, 110. The initial conditions include: 1) synchronization (SYNCH) bits per direction (S), propagation delay (PD) in terms of Unit Interval (UI) The term UI is used in communications protocols to indicate the time to send a symbol or a group of symbols if using a higher-level protocol. For ON/OFF keying, the UI is the time to send 1 bit. For QPSK, UI is the time to send 2 bits, bus turnaround time (TA) can be expressed in terms of UI as well as payload (P). The use of the term UI is a convenience to avoid the need to repeatedly reference specific time units such as nano-seconds. The process continues to step 212.

In step 212, the minimum frame length (FLEN) is calculated as follows:

$$FLEN = 2S + 2PD + 2TA + P$$

P is the total number of bits that have to be transferred both downstream and upstream in a serial frame. The serial frame is the sum of X and Y and the 2S, 2PD, 2TA. P = X+Y and all are in units of UI. The process continues to a loop in steps 214 and 216. In step 214, an evaluation or test is made to determine if the transfer rate per bit (R) is

$$R = P / FLEN$$

In the case R <= M the payload portion (P) is increased in step 216, as shown. Steps 214 and 216 are performed iteratively until R > M. Once R > M, the process continues to step 218, in which the optimal frame length is identified, and the process ends in step 220.

Features of the claimed invention include:

- To send bursty data, encode the 'm' possible bus states into 'n'(= $\log_2 m$) bits. This enables data, control, and status messages to be decoded by the receiver without the need to send control/status commands separately. For example, in the case of USB2 FS, the value of 'm' is 4 (J, K, SE0, and SE1), and the value of 'n' comes out to be 2.
- An optimal frame length and frame structure are derived to provide minimum latency in a given system topology. More specifically, the minimum frame length is derived that satisfies all the bandwidth constraints is shown to provide minimum latency.
- As protocol 1 is half-duplex in nature, the frame structure created allocates sufficient bandwidth both in the downstream and upstream directions. In doing so, there is no additional need to detect the change of direction of the stream and switch the frame structure/allocation based on that. Thus, it obviates the need to detect any additional SYNC/EOP detection mechanism for this purpose.
- The proposed frame structure is the encoding of a transition in protocol 1. The encoding allocates 2 slots both within the downstream and upstream direction. The two slots are spaced a maximum distance apart to minimize the latency between detecting a transition and encoding it into the frame.

- On the Device 2 side, while reconstructing the 12Mbps stream at Test Point 4 (TP4), the best estimate of duration between two transitions at Test Point 1 (TP1) is the average time period of the protocol under consideration, which is 83.33ns (12Mbps) in this example case.

The bits on Device 2 are collected and put in a queue. The queue is read at an average rate of 12Mbps, which gives optimal jitter.

## Frame Timing and Frame Structure

In this example, the protocol is selected to demonstrate the application of USB full speed (FS-12Mbps). USB full speed has tight latency, tight consecutive jitter specifications, and tight paired jitter specifications.
Protocol 2 and protocol 3 are assumed to be 125Mpbs MADI (Multichannel Audio Digital Interface) downstream and upstream, respectively.

- Due to half-duplex nature of the single aggregate link, a frame is split into a downstream portion and upstream portion
- Downstream portion is denoted by 'X' and Upstream portion is denoted by 'Y'
- Downstream portion indicates communication from Device 1 to Device 2
- Upstream portion indicates communication from Device 2 to Device 1

FIG. 4 is a frame timing diagram as observed on Test Point 2 (TP2). More specifically, FIG. 4 shows one complete bi-directional frame in time as it travels across the half-duplex single aggregate link between Device 1 and Device 2 on Test Point 2 (TP2). Initially, Device 1 transmits, and Device 2 receives the data, which is denoted by downstream transmission. 'X' denotes the actual bits transmitted in this direction. Once the End of Frame (EOF), which is the last bit in the downstream direction, is transmitted, Device 1 enters into IDLE state, and Device 1 turns on its receiver, Device 2 turns on its transmitter. This is accounted for in the turnaround time (TA) of Device 2. Then Device 2 starts transmitting, which is shown as upstream transmission.
As can be seen from the diagram, the entire frame is composed of the following components:

1. SYNC bits per direction (4 in this example, 2 per direction)
2. 2 times propagation delay (Tpd), i.e. 2 x Tpd
3. 2 times turnaround time (TA), i.e. 2 x TA
4. 'X' bits (Bits transmitted in downstream direction)
5. 'Y' bits (Bits transmitted in the upstream direction)

This example uses a 5b/6b encoding scheme in this system to ensure DC balance and sufficient transitions in the physical bits transmitted on the single aggregate link.
There are several variables in this example that can be modified:

1. Payload (P) is the sum of bits sent in both the upstream and downstream directions i.e., P = X + Y
2. X (Downstream Portion of bits)
3. Y (Upstream Portion of bits)

Due to the SYNC bits, propagation delay (Tpd), and turnaround time (TA), the effective rate of transfer can be defined as below (Equation 1):

$$EQ1: \quad \textit{Effective transfer rate per bit}\left(\textit{After} \frac{5b}{6b}\right)'R' = \frac{\textit{Actual information bits transmitted}}{\textit{Total Frame length}}$$

Removing any 5b/6b or other encoding reduces "actual information transmitted" = Total Frame length - (Total SYNC bits + 2 x Propagation delay + 2 x Turnaround time).

or

$$\text{Total Frame length} - (\text{Total SYNC bits} + 2 \text{ x Tpd} + 2 \text{ x TA}).$$

All the above quantities can be expressed in terms of Unit Interval (UI). As another example, there is a requirement to transmit and receive an aggregate rate of 343Mbps (125Mbps DN + 125Mbps UP + 50M USB FS + 43M Other data sources). Note that this includes both downstream bandwidth and upstream bandwidth. DN → Downstream, UP → Upstream.

Below are three other equations that are relevant to the problem (Equations 2, 3, and 4).

$$EQ2: \ Useful \ total \ bandwidth \ (due \ to \ coding) = Total \ bandwidth * \frac{5}{6}$$

$$EQ3: \ Required \ transfer \ rate \ per \ bit \ (M) = \frac{Required \ aggregated \ bandwidth}{Useful \ total \ bandwidth}$$

$$EQ4: \ Effective \ transfer \ rate \ per \ bit(R) \geq Required \ transfer \ rate \ per \ bit(M)$$

Table I is the list of key parameters or constraints as per the example above:

| | |
|---|---|
| Total Bandwidth | 500M |
| Useful bandwidth (due to 5b/6b) | 416.6667M |
| Required aggregated Bandwidth | 343M |
| Minimum effective transfer rate per bit required | 0.8232 |

A frame length whose effective transfer rate is at least 0.8232 is required.

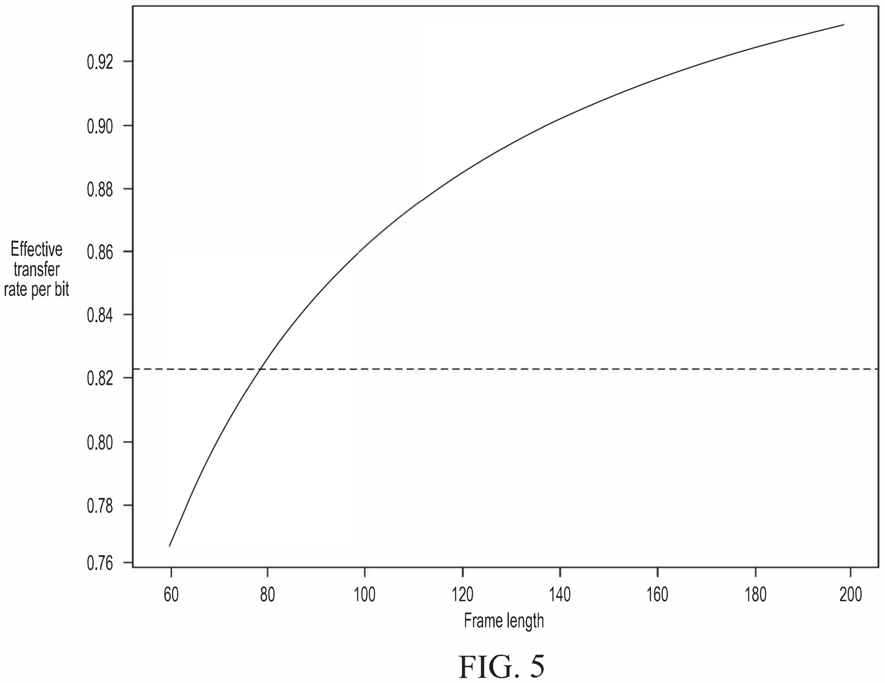

FIG. 5 illustrates a graph showing variation of effective transfer rate versus frame length. The dotted line in the FIG. 5 shows the effective transfer rate per bit of 0.8232 and applying the above equations a minimum frame length of 80 bits provides an effective transfer rate per bit of 0.825 that satisfies Equation 4 (EQ4). All values of frame length greater than and including 80 will satisfy this equation.

Now, coming to the latency aspect, another guiding principle is that as the frame length increases, the latency will also increase. This is explained further below.

Assume a half-duplex frame as shown in the FIG. 4.

In this example, allocate a slot in the downstream portion of the frame for USB FS.

If a USB transition comes after the occurrence of a slot in the downstream portion of the frame, the next slot in the downstream portion would come after a duration of an entire frame length. This would manifest itself as a latency in the USB FS end-to-end stream due to the delay in waiting for the next slot. So, the smallest frame length would mean the minimum possible latency achievable.

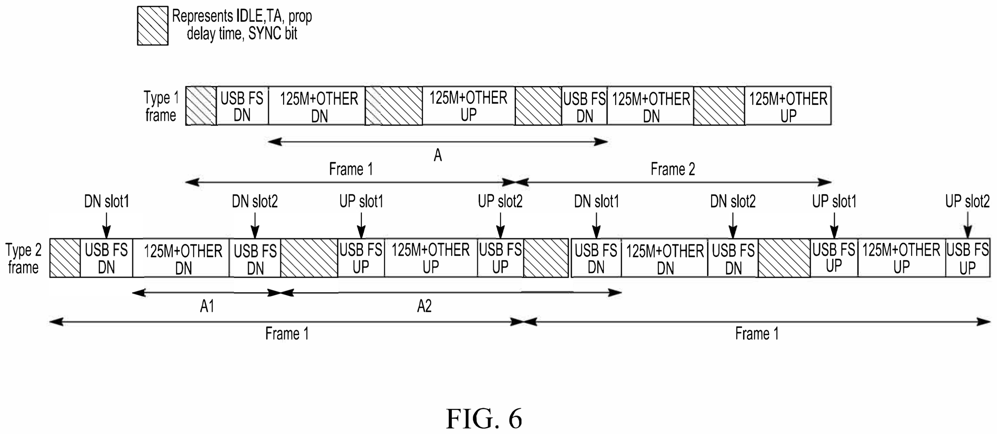

FIG. 6 illustrates two different frame types of frame structures Type 1 frame and Type 2 frame. As the frame length increases from Type 1 to Type 2 in FIG. 6, the effective transfer rate per bit increases, but the latency also increases. The term "A" is a frame length or a whole frame A1+A2, as shown. The terms "A1" and "A2" are portions of the frame, e.g., a slot in the frame. The optimal point in terms of latency will be the minimum frame length from the curve.

Apply all of the constraints as shown in the Table I above, the minimum frame length achievable is 80 UIs.

Note that this idea can be generalized, and similar lines of thought can be used to arrive at an optimal frame length based on different values of total bandwidth, required bandwidth, and system encoding requirements.

Once the frame length is decided, a frame structure is determined.

The following are two types of frame structures are evaluated:

For encoding a USB FS transition, 2 bits per transition for encoding the four bus states is required, i.e., J, K, SE0, and SE1. So, the total USB bandwidth per direction is 12 x 2 = 24 Mbps.

In type 1 frame, there is a USB slot at the beginning of the frame. A variable of interest is the time duration between 2 slots, which is the frame length duration, i.e., for this example 500MHz, the UI is 2ns so 160ns is 80UI. The end-to-end latency that would be incurred in USB FS stream would be at least 160 ns. Also, since in a duration of 160 ns there can be a maximum of 2 USB FS transitions in one direction, the number of bits required in 1 slot is 4 bits. This is just the framing transmit latency. Note that 1 hub USB FS latency is 70ns. With this type of frame structure, the total end-to-end latency would already be approximately 3 times that of hub latency.

In type 2 frame the 2 USB FS transition are split across 2 slots per direction. The label "Frame 1" on the bottom of FIG. 6 is a full frame that includes both downstream and upstream portions as required in the half-duplex system. Note that the type 1 frame only has 1 slot for USB2 FS data while the type 2 frame has 2 slots. The second slot helps reduce latency. It also helps with mismatch between external and internal clocks.

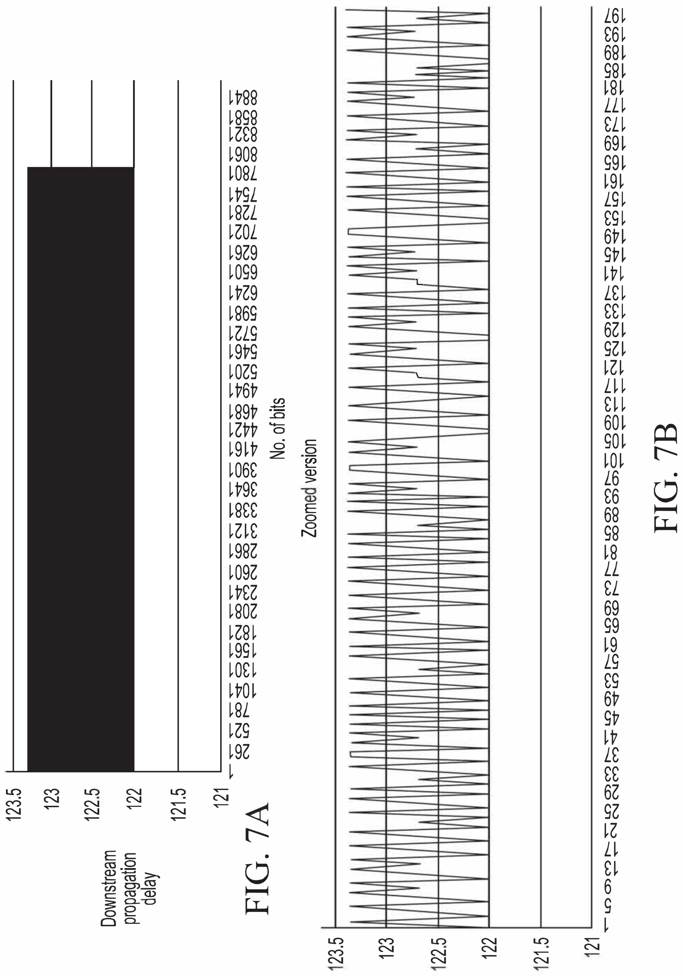

Here, the variable of interest is the time duration between any two consecutive slots in a single direction, namely "A1" and "A2" in the FIGs. 7A and 7B. More specifically, FIG. 7A is a graph, in normal in size, illustrating propagation delay for the USB FS downstream path and FIG. 7B is in enlarged in size.

Note that the worst-case latency is directly related to the worst-case time duration between two slots or portions of a frame, namely "A1" and "A2". FIG. 7 illustrates the desired results for A1 and A2. They are the maximum latency for a USB2 event to be encoded into the serial stream.

By choosing more than 1 slot per direction and spacing them far apart from each other, there are more opportunities and, therefore less latency to pack the USB transition onto the frame, and in the process, to achieve optimal latency.

On the receiving side, whenever receive the USB FS information is received, this is put in a queue that can be read out at a 12 Mbps rate.

After choosing the optimal frame structure, the bits allocated to each of the protocols per direction is determined. These can be found by applying the below constraints:

Downstream bandwidth constraint: $(A/80) \times 500M > 24 + 125$

Upstream bandwidth constraint: $(B/80) \times 500M > 24 + 125$

Here "A" denotes the useful bits before 5b/6b encoding that are available to be used in the downstream direction. Similarly, "B" denotes the useful bits before 5b/6b encoding that are available to be used in upstream direction. Also due to 5b/6b both "A" and "B" needs to be multiple of 5 to avoid fractions in frame length. Applying all the constraints the optimal values of "A" and "B'" achieved are 30 and 25 respectively.

Also, in the current design problem, a 500MHz clock is used to derive 12Mbps rate. This is handled by using the fact that 500MHz clock implies 2ns clock period and 12Mbps implies 83.33ns clock period. The 12Mbps or 83.33ns rate can be achieved by using 2 cycles of 84ns and 1 cycle of 82ns.

With the above assumptions, a model is constructed, and end-to-end propagation delay is plotted in both downstream and upstream directions.

FIG. 7 is a set of graphs, normal in size and enlarged in size, illustrating propagation delay for the USB FS downstream path. Specifically, the propagation delay of a USB FS transition from Test Point 1 (TP1) of Device 1 to Test Point 4 (TP4) of Device 2. The max value is around 123.5ns. The contribution is due to framing or aggregation, 5b/6b codec, and using a 500MHz clock. Note that this excludes clock jitter, ppm, input transition jitter, etc.

The variation in prop delay for any consecutive transition or paired transition will be less than +/- 1.5ns. Note that is mainly because a 500MHz clock is used in this example to generate a 12Mbps stream.

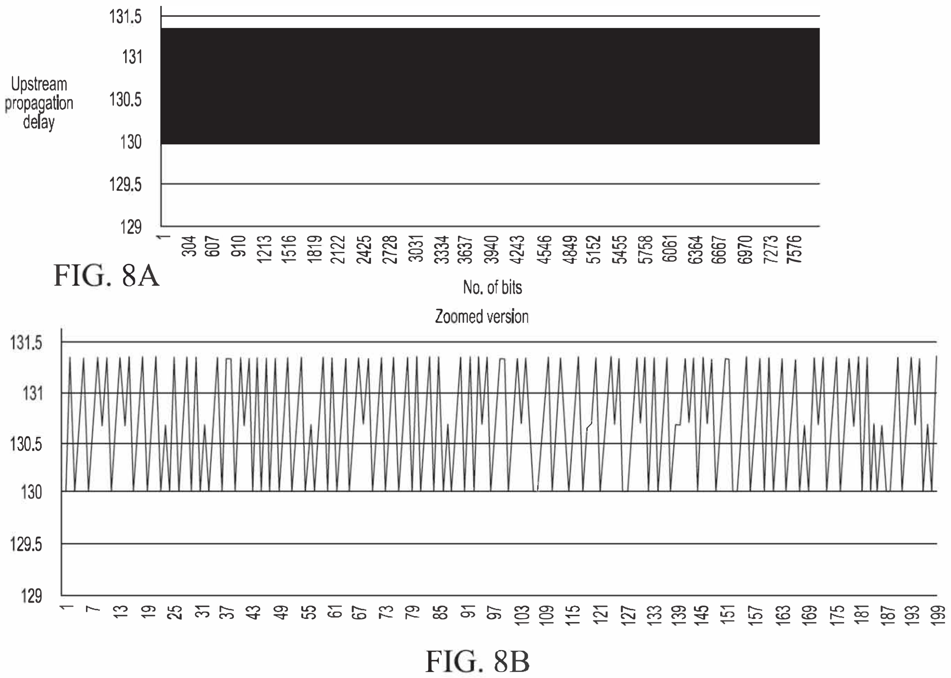

FIGs. 8A and 8B is a set of graphs illustrating propagation delay for USB FS upstream path. More specifically, FIG. 8A is in normal in size normal size and FIG 8B is in enlarged size. FIGs. 8A and 8B illustrates the propagation delay of a USB FS transition from Test Point 4 (TP4) of Device 2 to Test Point 1 (TP1) of Device 1. The max value is around 131.5 ns. The contribution is due to framing or aggregation, 5b/6b codec, and using a 500MHz clock). Note that this excludes clock jitter, ppm, input transition jitter, etc.

The variation in prop delay for any consecutive transition or paired transition will be less than +/- 1.5ns. Note that it is mainly because a 500MHz clock is used in this example to generate a 12 Mbps stream.

### Communication System Block Diagram

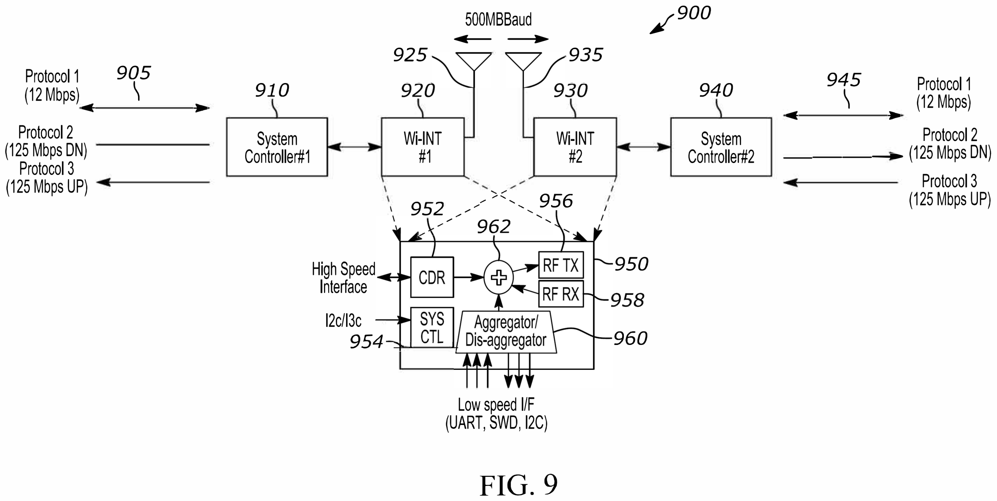

FIG. 9 is a high-level representation of a communications system 900 in accordance with various embodiments of the disclosure. Shown is a system controller or simply controller 910, such as electronic device 1 110 of FIG. 1. The system controller 910, in one example, or the wireless interface serializer/deserializer 920, includes a hardware state machine to implement the flow diagram of FIG. 2 above. In another example, the system controller 910 , or the wireless interface serializer/deserializer 920, includes a processor programmed to carry out the flow diagram of FIG. 2 above. In this example, the system controller 910 is communicatively coupled to the wireless interface serializer/deserializer 920. In another example, the wireless interface is a wired interface.

A corresponding wireless interface serializer/deserializer 930 is communicatively coupled to the system controller 2 940 (e.g., electronic device 2, 130 of FIG. 1).

Further details for each wireless interface serializer/deserializer 920 and 930 are shown in block 950. It is important to note that although a wireless interface is shown, that the claimed invention is also applicable to a s wire link as well. Shown in block 950 is a clock data recovery (CDR) 952 communicatively coupled to a high-speed interface. A system frame and frame length controller or frame controller 954 receives control signals, in this example, through an I2C bus, I3C bus, or System Power Management Interface (SPMI) bus used for local control. The local control includes the number of bits sent, the frame rate, and other system variables or system constraints. A radio frequency transmitter (RF TX) 956 and a radio frequency receiver (RF RX) 958 are shown. As shown, the RF TX and RF RX are communicatively coupled to one or more antennas. An aggregator/disaggregator 960 (described above in the section Aggregation System) includes an interface (I/F) inputs and outputs for receiving in low-speed universal asynchronous receiver-transmitter (UART), single wire debug (SWD), and I2C bus for sending from one system controller 1 910 to the second system control 2 940. The aggregator/disaggregator 960, the CDR 952 and RF TX 956 and RF RX 958 are all communicatively coupled together 962 as shown. In another example, the aggregated data (UART, SWD, I2C) may be going to the components that includes the system controller but not necessarily only to the system controller. This data is bidirectional and can flow downstream, as mentioned here, or upstream.

## Summary

The communication system provides a method and an electronic device for aggregating multiple data streams over a single aggregate link interface. The electronic device includes a plurality of input ports, as an example Protocol 1, Protocol 2 and Protocol 3 on FIG. 1 and FIG. 9, is configured to receive at least two serial communication signals.

One or more of the communication signals may be half-duplex or full-duplex serial communications. The serial communication signals may be associated with two or more different serial communication protocols. Further serial communication signals may be different bandwidths from each other. One or more of the serial communication signals may be based on a universal serial bus protocol (USB). Further, one or more of the serial communication signals may be one of jitter-sensitive isochronous data stream, latency-sensitive bursty data stream, or a round-trip delay-constrained data stream.

The electronic device includes a frame controller configured to determine a minimum effective transfer rate (M) for a single aggregate link for a given frame structure. The controller is further configured to set a minimum frame length (FLEN) based on a combination of sync bits (S), propagation delay (PD), turnaround (TA), and payload (P). The transfer rate per bit (R) based on the payload (P) and minimum frame length (FLEN) is evaluated. In response to the transfer rate per bit (R) being less than or equal to the minimum effective transfer rate (M), incrementing the payload (P) of the given frame structure until the transfer rate per bit (R) is greater than the minimum effective transfer rate (M). A serializer/deserializer acts as an encoder to encodes the serial communication signals to generate an encoded serial communication signal, wherein the encoded serial communication signal enables reconstruction of the communication signals independent of a clock signal. A transmitter transmits the encoded serial communication signal over the single aggregate link. The single interface may be a wired interface or a wireless interface.

The minimum effective transfer rate (M) may be based on a total bandwidth (T), an encoding factor (g), and bandwidth requirement for aggregation (B). The payload (P) is variable with constraints.

One example FLEN is based on FLEN = 2S + 2PD + 2TA + P.

Disclosed is an electronic device 110, 130 for aggregating multiple data streams over a single aggregate link. The electronic device 110, 130 comprises a plurality of input ports 905, as an example Protocol 1, Protocol 2 and Protocol 3 on FIG. 1, configured to receive at least two serial communication signals. The electronic device 110, 130 also comprises a system controller 954 configured to determine a minimum effective transfer rate for a single interface for a given frame structure, to set a minimum frame length based on a combination of sync bits, propagation delay, turnaround, and payload, and to evaluate a transfer rate per bit based on the payload and minimum frame length, and in response to the transfer rate per bit being less than or equal to the minimum effective transfer rate, incrementing the payload of the given frame structure until the transfer rate per bit is greater than the minimum effective transfer rate. The electronic device 110, 130 also comprises a controller or serializer/deserializer that acts like an encoder to encode the at least two serial communication signals to generate an encoded serial communication signal, wherein the encoded serial communication signal enables reconstruction of the at least two communication signals independent of a clock signal. The electronic device 110, 130 also comprises a transmitter 950, 958 with an antenna 925 for transmitting the encoded serial communication signal over the single aggregate link.

One or more embodiments of the present disclosure may include features recited in the following numbered clauses:

1. An electronic device for aggregating multiple data streams over a single aggregate link, the electronic device comprising: a plurality of input ports configured to receive at least two serial communication signals; a frame controller configured to determine a minimum effective transfer rate for a single interface for a given frame structure, set a minimum frame length based on a combination of sync bits, propagation delay, turnaround, and payload, and evaluate a transfer rate per bit based on the payload and minimum frame length and in response to the transfer rate per bit being less than or equal to the minimum effective transfer rate, incrementing the payload of the given frame structure until the transfer rate per bit is greater than the minimum effective transfer rate; a controller to encoder the at least two serial communication signals to generate an encoded serial communication signal, wherein the encoded serial communication signal enables reconstruction of the at least two communication signals independent of a clock signal; and a transmitter for transmitting the encoded serial communication signal over the single aggregate link.

2. The electronic device of clause 1, wherein the minimum effective transfer rate for the single aggregate link for a given frame structure is based on a total bandwidth, an encoding factor and bandwidth requirement for aggregation.

3. The electronic device of clause 1, wherein the payload is variable with one or more constraints based on total bandwidth, useful bandwidth, required aggregated bandwidth, encoding , latency, and minimum effective transfer rate per bit required.

4. The electronic device of clause 1, wherein the setting a minimum frame length is based on FLEN = 2S + 2PD + 2TA + P.

5. The electronic device of clause 1, wherein the at least two serial communication signals are associated with two or more different serial communication protocols.

6. The electronic device of clause 1, wherein the at least two serial communication signals are different bandwidths from each other.

7. The electronic device of clause 1, wherein at least one of the at least two serial communication signals are based on a universal serial bus protocol.

8. The electronic device of clause 1, wherein the single aggregate link is one of a wired interface or a wireless interface.

9. The electronic device of clause 1, wherein at least one of the at least two serial communication signals is one of jitter-sensitive isochronous data stream, latency-sensitive bursty data stream, or a round-trip delay-constrained data stream.

10. The electronic device of clause 1, wherein at least one of the at least two serial communication signals is one of half-duplex or full-duplex serial communications.

11. A method for aggregating multiple data streams over a single aggregate link, the method comprising:

    a) receiving at least two serial communication signals;

    b) determining a minimum effective transfer rate for a single aggregate link for a given frame structure;

    c) setting a minimum frame length based on a combination of sync bits, propagation delay, turnaround, and payload;

    d) evaluating a transfer rate per bit based on the payload and minimum frame length;

    e) in response to the transfer rate per bit being less than or equal to the minimum effective transfer rate, incrementing the payload of the given frame structure and repeating step d and step e, otherwise when the transfer rate per bit is greater than the minimum effective transfer rate: encoding the at least two serial communication signals to generate an encoded serial communication signal, wherein the encoded serial communication signal enables reconstruction of the at least two communication signals independent of a clock signal, and transmitting the encoded serial communication signal over the single aggregate link.

12. The method of clause 11, wherein the minimum effective transfer rate for a single aggregate link for a given frame structure is based on a total bandwidth, an encoding factor and bandwidth requirement for aggregation.

13. The method of clause 11, wherein the payload is variable with one or more constraints based on total bandwidth, useful bandwidth, required aggregated bandwidth, encoding , latency, and minimum effective transfer rate per bit required.

14. The method of clause 11, wherein the setting a minimum frame length is based on

$$FLEN = 2S + 2PD + 2TA + P.$$

15. The method of clause 11, wherein the at least two serial communication signals are associated with two or more different serial communication protocols.

16. The method of clause 11, wherein the at least two serial communication signals are different bandwidths from each other.

17. The method of clause 11, wherein at least one of the at least two serial communication signals are based on a universal serial bus protocol.

18. The method of clause 11, wherein the single aggregate link is one of a wired interface or a wireless interface.

19. The method of clause 11, wherein at least one of the at least two serial communication signals is one of jitter-sensitive isochronous data stream, latency-sensitive bursty data stream, or a round-trip delay-constrained data stream.

20. The method of clause 11, wherein at least one of the at least two serial communication signals is one of half-duplex or full-duplex serial communications.

## Non-Limiting Examples

The term "coupled", as used herein, is defined as "connected" and encompasses the coupling of devices that may be physically, electrically or communicatively connected, although the coupling may not necessarily be directly and not necessarily be mechanical. The term "configured to" describes hardware, software, or a combination of hardware and software that is adapted to, set up, arranged, built, composed, constructed, designed, or that has any combination of these characteristics to carry out a given function. The term "adapted to" describes hardware, software, or a combination of hardware and software that is capable of, able to accommodate, to make, or that is suitable to carry out a given function.

The terms "a" or "an", as used herein, are defined as one or more than one. Also, the use of introductory phrases such as "at least one" and "one or more" in the claims should not be construed to imply that the introduction of another claim element by the indefinite articles "a" or "an" limits any particular claim containing such introduced claim element to inventions containing only one such element, even when the same claim includes the introductory phrases "one or more" or "at least one" and indefinite articles such as "a" or "an". The same holds true for the use of definite articles. Unless stated otherwise, terms such as "first" and "second" are used to arbitrarily distinguish between the elements such terms describe. Thus, these terms are not necessarily intended to indicate temporal or other prioritization of such elements. The term "coupled", as used herein, is not intended to be limited to a direct coupling or a mechanical coupling, and that one or more additional elements may be interposed between two elements that are coupled.

As will be appreciated by one skilled in the art, aspects of the present disclosure may be embodied as a system, method, or computer program product. Accordingly, aspects of the present disclosure may take the form of an entirely hardware embodiment, an entirely software embodiment (including firmware, resident software, micro-code, etc.) or an embodiment combining software and hardware aspects that may all generally be referred to herein as a "circuit" or "system".

The invention may be a system, a method, and/or a computer program product. The computer program product may include a computer-readable storage medium (or media) having computer readable program instructions thereon for causing a processor to carry out aspects of the invention.

In one embodiment, the computer program product includes a non-transitory storage medium readable by a processing circuit and storing instructions for execution by the processing circuit for performing a method. The computer-readable storage medium can be a tangible device that can retain and store instructions for use by an instruction execution device. The computer-readable storage medium may be, for example, but is not limited to, an electronic storage device, a magnetic storage device, an optical storage device, an electromagnetic storage device, a semiconductor storage device, or any suitable combination of the foregoing. A computer-readable storage medium, as used herein, is not to be construed as being transitory signals per se, such as radio waves or other freely propagating electromagnetic waves, electromagnetic waves propagating through a waveguide or other transmission media, e.g., light pulses passing through a fiber-optic cable), or electrical signals transmitted through a wire.

Computer-readable program instructions for carrying out operations of the invention may be assembler instructions, instruction-set-architecture (ISA) instructions, machine instructions, machine-dependent instructions, microcode, firmware instructions, state-setting data, or either source code or object code written in any combination of one or more programming languages, including an object-oriented programming language such as Smalltalk, C++, and conventional procedural programming languages, such as the "C" programming language or similar programming languages. The computer-readable program instructions may execute entirely or partly on a user's computer or entirely or partly on a remote computer or server. In the latter scenario, the remote computer may be connected to the user's computer through any type of network, including a local area network (LAN), a wide area network (WAN), an Ultra-Wide Band (UWB) network, or the connection may be made to an external computer (for example, through the Internet). In some embodiments, electronic circuitry including, for example, programmable logic circuitry, field-programmable gate arrays (FPGA), or programmable logic arrays (PLA) may execute the computer-readable program instructions by utilizing state information of the computer-readable program instructions to personalize the electronic circuitry, in order to perform aspects of the invention.

Aspects of the invention are described herein with reference to flowchart illustrations and/or block diagrams of methods, apparatus (systems), and computer program products according to embodiments of the invention. Each block of the flowchart illustrations and/or block diagrams, and combinations of blocks in the flowchart illustrations and/or block diagrams, can be implemented by computer readable program instructions.

These computer-readable program instructions may be provided to a processor of a general-purpose computer, special purpose computer, or other programmable data processing apparatus to produce a machine, such that the instructions, which execute via the processor of the computer, create means for implementing the functions/acts specified in the flowchart and/or block diagram blocks. These computer-readable program instructions may also be stored in a computer-readable storage medium that can direct a computer to function in a particular manner, such that the computer-readable storage medium having instructions stored therein comprises an article of manufacture including instructions which implement aspects of the function/act specified in the flowchart and/or block diagram block or blocks.

The description of the present disclosure has been presented for purposes of illustration and description but is not intended to be exhaustive or limited to the invention in the form disclosed. Many modifications and variations will be apparent to those of ordinary skill in the art without departing from the scope of the invention. The embodiment was chosen and described in order to best explain the principles of the invention and the practical application and to enable others of ordinary skill in the art to understand the invention for various embodiments with various modifications as are suited to the particular use contemplated.

Although specific embodiments of the invention have been disclosed, those having ordinary skill in the art will understand that changes can be made to the specific embodiments without departing from the scope of the invention. The scope of the invention is not to be restricted, therefore, to the specific embodiments, and it is intended that the appended claims cover any and all such applications, modifications, and embodiments within the scope of the invention.

**Claims**

1. An electronic device for aggregating multiple data streams over a single aggregate link, the electronic device comprising:

   a plurality of input ports configured to receive at least two serial communication signals;
   a frame controller configured to

   determine a minimum effective transfer rate for a single interface for a given frame structure,
   set a minimum frame length based on a combination of sync bits, propagation delay, turnaround, and payload, and
   evaluate a transfer rate per bit based on the payload and minimum frame length and in response to the transfer rate per bit being less than or equal to the minimum effective transfer rate, incrementing the payload of the given frame structure until the transfer rate per bit is greater than the minimum effective transfer rate;

   a controller to encoder the at least two serial communication signals to generate an encoded serial communication signal, wherein the encoded serial communication signal enables reconstruction of the at least two communication signals independent of a clock signal; and
   a transmitter for transmitting the encoded serial communication signal over the single aggregate link.

2. The electronic device of claim 1, wherein the minimum effective transfer rate for the single aggregate link for a given frame structure is based on a total bandwidth, an encoding factor and bandwidth requirement for aggregation.

3. The electronic device of any of the preceding claims, wherein the payload is variable with one or more constraints based on total bandwidth, useful bandwidth, required aggregated bandwidth, encoding, latency, and minimum effective transfer rate per bit required.

4. The electronic device of any of the preceding claims, wherein the setting a minimum frame length is based on

$$FLEN = 2S + 2PD + 2TA + P.$$

5. The electronic device of claim 1, wherein the at least two serial communication signals are associated with two or more different serial communication protocols.

6. The electronic device of any of the preceding claims, wherein the at least two serial communication signals are different bandwidths from each other.

7. The electronic device of any of the preceding claims, wherein at least one of the at least two serial communication signals are based on a universal serial bus protocol.

8. The electronic device of any of the preceding claims, wherein the single aggregate link is one of a wired interface or a wireless interface.

9. The electronic device of any of the preceding claims, wherein at least one of the at least two serial communication signals is one of jitter-sensitive isochronous data stream, latency-sensitive bursty data stream, or a round-trip delay-constrained data stream.

10. The electronic device of any of the preceding claims, wherein at least one of the at least two serial communication signals is one of half-duplex or full-duplex serial communications.

11. A method for aggregating multiple data streams over a single aggregate link, the method comprising:

   a) receiving at least two serial communication signals;
   b) determining a minimum effective transfer rate for a single aggregate link for a given frame structure;
   c) setting a minimum frame length based on a combination of sync bits, propagation delay, turnaround, and payload;
   d) evaluating a transfer rate per bit based on the payload and minimum frame length;
   e) in response to the transfer rate per bit being less than or equal to the minimum effective transfer rate, incrementing the payload of the given frame structure and repeating step d and step e, otherwise when the transfer rate per bit is greater than the minimum effective transfer rate:

      encoding the at least two serial communication signals to generate an encoded serial communication signal, wherein the encoded serial communication signal enables reconstruction of the at least two communication signals independent of a clock signal, and
      transmitting the encoded serial communication signal over the single aggregate link.

12. The method of claim 11, wherein the minimum effective transfer rate for a single aggregate link for a given frame structure is based on a total bandwidth, an encoding factor and bandwidth requirement for aggregation.

13. The method of claim 11 or 12, wherein the payload is variable with one or more constraints based on total bandwidth, useful bandwidth, required aggregated bandwidth, encoding , latency, and minimum effective transfer rate per bit required.

14. The method of any of the preceding claims 11 to 13, wherein the setting a minimum frame length is based on

$$FLEN = 2S + 2PD + 2TA + P.$$

15. The method of any of the preceding claims 11 to 14, wherein the at least two serial communication signals are associated with two or more different serial communication protocols.

FIG. 1

FIG. 2

| | slot1 | | slot2 | | slot1 | | slot2 | | | | | | | | |
|---|---|---|---|---|---|---|---|---|---|---|---|---|---|---|---|
| ▨ | 12Mbps DN | 125M+OTHER DN | 12Mbps DN | ▨ | 12Mbps UP | 125M+OTHER UP | 12Mbps UP | ▨ | 12Mbps DN | 125M+OTHER DN | 12Mbps DN | ▨ | 12Mbps P | 125M+OTHER UP | 12Mbps UP |

A1          A2

## FIG. 3

Downstream Transmission  IDLE  Upstream Transmission

SYNC1 SYNC2 ... EOF    SYNC1 SYNC2 Payload EOF

2ns

X

5.5ns(Tpd)  4.5ns(TA)

5.5ns(Tpd)

4.5ns(TA)

Y

## FIG. 4

FIG. 5

FIG. 6

FIG. 7A

FIG. 7B

FIG. 8A

FIG. 8B

FIG. 9

EP 4 746 386 A1

Europäisches
Patentamt

European
Patent Office

Office européen
des brevets

# EUROPEAN SEARCH REPORT

**Application Number**

EP 25 20 9871

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/231863 A1 (APPLE INC [US]) 3 November 2022 (2022-11-03) * paragraph [0036] - paragraph [0037] * * paragraph [0056] * * figure 3 * ----- | 1-15 | INV. H04L69/18 H04L5/16 H04L5/22 |
| A | US 5 361 261 A (EDEM BRIAN C [US] ET AL) 1 November 1994 (1994-11-01) * column 3, line 29 - line 49 * * column 15, line 7 - line 35 * ----- | 1-15 | |
| A | US 2013/336334 A1 (GILBERT JEFFREY M [US] ET AL) 19 December 2013 (2013-12-19) * paragraphs [0023], [0029] * * paragraph [0046] - paragraph [0049] * * paragraph [0085] * ----- | 1-15 | |
| A | US 2009/248924 A1 (MELIN TOBIAS [SE]) 1 October 2009 (2009-10-01) * paragraph [0008] * ----- | 1-15 | TECHNICAL FIELDS SEARCHED (IPC) H04L |

The present search report has been drawn up for all claims

| Place of search | Date of completion of the search | Examiner |
|---|---|---|
| The Hague | 5 March 2026 | Oechsner, Simon |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 20 9871

05-03-2026

| Patent document cited in search report | Publication date | Patent family member(s) | | Publication date |
|---|---|---|---|---|
| WO 2022231863 A1 | 03-11-2022 | NONE | | |
| US 5361261 A | 01-11-1994 | DE | 69320143 T2 | 08-04-1999 |
| | | EP | 0596645 A1 | 11-05-1994 |
| | | JP | 3448086 B2 | 16-09-2003 |
| | | JP | H077506 A | 10-01-1995 |
| | | KR | 940012968 A | 24-06-1994 |
| | | US | 5361261 A | 01-11-1994 |
| US 2013336334 A1 | 19-12-2013 | CN | 104365034 A | 18-02-2015 |
| | | EP | 2862290 A1 | 22-04-2015 |
| | | JP | 6150886 B2 | 21-06-2017 |
| | | JP | 2015527775 A | 17-09-2015 |
| | | KR | 20150030243 A | 19-03-2015 |
| | | TW | 201408024 A | 16-02-2014 |
| | | US | 2013336334 A1 | 19-12-2013 |
| | | WO | 2013188571 A1 | 19-12-2013 |
| US 2009248924 A1 | 01-10-2009 | EP | 2255326 A1 | 01-12-2010 |
| | | JP | 2011524096 A | 25-08-2011 |
| | | TW | 200947218 A | 16-11-2009 |
| | | US | 2009248924 A1 | 01-10-2009 |
| | | WO | 2009118582 A1 | 01-10-2009 |

EPO FORM P0459